# FASCICULE DE BREVET EUROPEEN

(11) **EP 3 836 014 B1**
(45) Date de publication et mention de la délivrance du brevet: **29.04.2026**
(21) Numéro de dépôt: 20212821.1
(22) Date de dépôt: 09.12.2020
(51) Int. Cl.: G06V 10/74

(54) **PROCÉDÉ DE SUIVI D'UN ÉLÉMENT, DISPOSITIF ÉLECTRONIQUE ET PRODUIT PROGRAMME D'ORDINATEUR ASSOCIÉS**
VERFAHREN ZUR VERFOLGUNG EINES ELEMENTS, EINES ZUGEHÖRIGEN ELEKTRONISCHEN GERÄTS UND EINES COMPUTERPROGRAMMPRODUKTS
METHOD OF TRACKING AN ELEMENT, ASSOCIATED ELECTRONIC DEVICE AND COMPUTER PROGRAM PRODUCT

(30) Priorité: 11.12.2019 FR 1914190
(43) Date de publication de la demande: 16.06.2021
(73) Titulaire: Bull SAS, 78340 Les Clayes-sous-Bois (FR)
(72) Inventeur: ARNAISE, Nicolas, 38130 ECHIROLLES (FR); BOUKAMEL-DONNOU, Cécile, 38130 ECHIROLLES (FR); PELLETIER, Benoît, 38960 SAINT ETIENNE DE CROSSEY (FR)
(74) Mandataire: IPAZ

(56) Documents cités:
- WO-A1-2016/140680
- WO-A2-2009/111498
- US-A1- 2011 135 154
- US-A1- 2018 157 939
- US-B2- 9 524 448

## Description

La présente invention concerne un procédé de suivi d'un élément. La présente invention concerne également un dispositif électronique associé de suivi d'un élément, ainsi qu'un produit programme d'ordinateur associé.

Dans le domaine de la vidéo-surveillance, des dispositifs de suivi (en anglais « tracking ») sont utilisés pour suivre des individus au cours du temps. De tels dispositifs permettent, ainsi, une réidentification de l'individu sur des images successives.

En particulier, il est connu des dispositifs de suivi pour lesquels le profil d'un nouvel individu à identifier est comparé au profil d'un individu de référence. Un score est alors affecté à la comparaison. Le nouvel individu à identifier est considéré comme étant l'individu de référence lorsque le score obtenu pour la comparaison est supérieur à un seuil, et n'est pas identifié dans le cas contraire.

Néanmoins, de tels dispositifs ne permettent pas de suivre un individu lors d'un changement d'apparence de celui-ci, par exemple, si l'individu enlève un vêtement, ce qui est à l'origine de faux négatifs. US 9 524 448 82 concerne le suivi d'objets multi-caméras, dans lequel la signature apparente d'un objet varie d'une caméra à l'autre en raison des changements de point de vue et de posture.

Il existe donc un besoin pour un dispositif de suivi d'éléments permettant de diminuer le taux de faux négatifs lors du suivi. L'invention est définie dans les revendications indépendantes.

A cet effet, l'invention a pour objet un procédé de suivi procédé de suivi d'un élément de référence sur des images successives d'un environnement, l'élément de référence étant associé à une liste de signatures visuelles de référence comprenant au moins une signature visuelle de référence, la signature visuelle d'un élément étant un vecteur décrivant l'apparence de l'élément, le procédé étant mis en oeuvre par un dispositif électronique de suivi et comprenant à chaque instant les étapes de :
- réception d'au moins une image de l'environnement,
- le cas échéant, détection d'au moins un premier élément sur au moins une image reçue,
- détermination d'une première signature visuelle pour au moins une détection de chaque premier élément,
- calcul, pour chaque premier élément, d'au moins une distance entre la ou les premières signatures visuelles et la ou les signatures visuelles de référence,
- comparaison, pour chaque premier élément, d'une distance, fonction de la ou des distances calculées pour le premier élément, à un premier seuil et à un deuxième seuil, le premier seuil étant inférieur ou égal au deuxième seuil,
- pour chaque premier élément, identification du premier élément comme étant l'élément de référence, lorsque la distance comparée est inférieure ou égale au premier seuil, le premier élément étant non-identifié lorsque la distance comparée est strictement supérieure au deuxième seuil, et
- le cas échéant, lorsque le premier élément n'a pas été identifié lors de l'étape d'identification et que le premier élément est le même élément que l'élément de référence avec une apparence différente de l'élément de référence, ajout de la première signature visuelle à la liste de signatures visuelles de référence après réception d'une commande d'ajout d'un utilisateur.

Selon d'autres aspects avantageux de l'invention, le procédé de suivi comprend une ou plusieurs des caractéristiques suivantes, prises isolément ou suivant toutes les combinaisons techniquement possibles :
- le procédé comprend, en outre, les étapes de :
   - détection d'un élément initial sur au moins une image reçue antérieurement par rapport à l'image sur laquelle le ou chaque premier élément a été détecté,
   - détermination d'une signature visuelle pour au moins une détection de l'élément initial,
   - acquisition d'une commande de suivi de l'élément initial de sorte que l'élément initial est l'élément de référence et chaque signature visuelle de l'élément initial est une signature visuelle de référence de la liste de signatures de référence ;
- le premier seuil est différent du deuxième seuil ;
- lorsque la distance comparée est strictement supérieure au premier seuil et est inférieure ou égale au deuxième seuil, le procédé comprend une étape d'envoi d'une requête de validation de l'identification du premier élément ;
- le procédé comprend une étape d'ajout de la première signature visuelle à la liste de signatures visuelles de référence après réception d'une validation de l'utilisateur en réponse à la requête de validation ;
- les images sont en provenance d'un réseau de caméras ;
- l'étape de réception comprend la réception d'au moins deux images de l'environnement imageant l'environnement selon deux points de vue différents, les deux images étant en provenance de deux caméras du réseau de caméras positionnées à des emplacements distincts ;
- chaque signature visuelle est déterminée par un modèle comprenant un réseau de neurones.

L'invention concerne, en outre, un dispositif électronique de suivi d'un élément de référence sur des images successives d'un environnement, l'élément de référence étant associé à une liste de signatures visuelles de référence comprenant au moins une signature visuelle de référence, la signature visuelle d'un élément étant un vecteur décrivant l'apparence de l'élément, le dispositif de suivi comprenant :
- un canal de réception d'images,
- une interface homme-machine, et
- un calculateur configuré pour mettre en œuvre un procédé de suivi tel que décrit précédemment.

L'invention concerne aussi un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'un procédé tel que décrit précédemment lorsque le programme d'ordinateur est mis en œuvre sur l'unité de traitement des données.

D'autres caractéristiques et avantages de l'invention apparaîtront à la lecture de la description qui suit de modes de réalisation de l'invention, donnée à titre d'exemple uniquement, et en référence aux dessins qui sont :
- [Fig 1] figure 1, une représentation schématique d'un dispositif de suivi recevant des images en provenance d'un réseau de caméras imageant un environnement, et
- [Fig 2] figure 2, un organigramme d'un exemple de mise en œuvre d'un procédé de suivi.

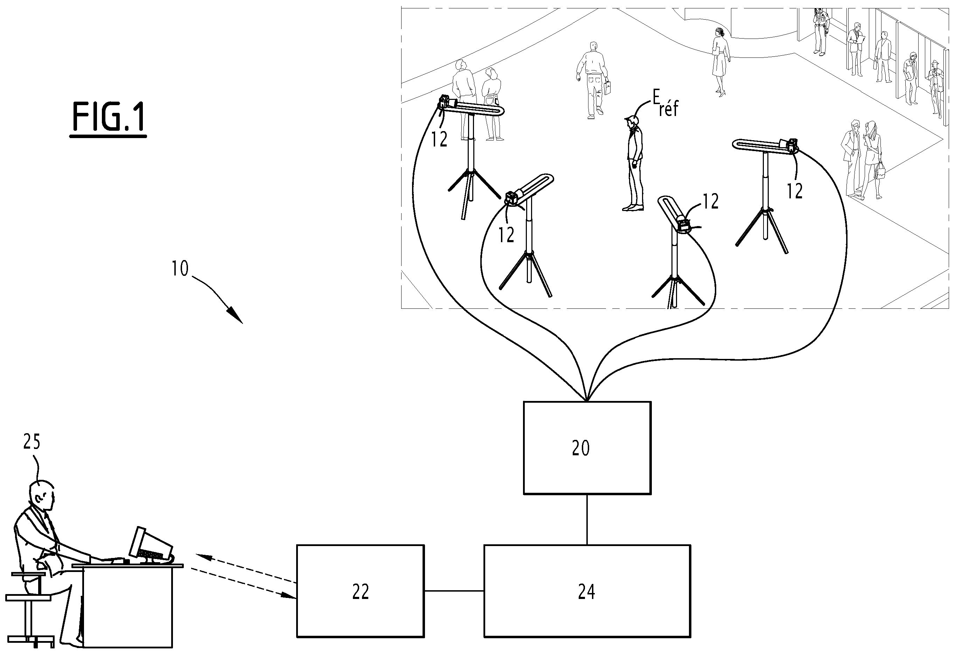

Un dispositif électronique 10 de suivi d'un élément E_{réf} dans un environnement est illustré par la figure 1. L'environnement est, par exemple, de type urbain.

Dans l'exemple illustré par la figure 1, l'environnement est imagé par un réseau de caméras 12. Les caméras 12 du réseau sont positionnées de sorte à imager l'environnement selon des points de vue différents. En particulier, les points de vue diffèrent entre chaque caméra en fonction des conditions climatiques, de l'environnement présent et de la position des caméras.

En variante, l'environnement est imagé par une seule caméra 12.

L'élément E_{réf} est, par exemple, un individu ou un animal. En variante, l'élément E_{réf} est un objet, tel qu'un véhicule.

Le dispositif 10 comprend un canal 20 de réception d'images, une interface homme-machine 22 et un calculateur 24.

Le canal 20 de réception d'images est destiné à être connecté à un système d'acquisition d'images, tel que le réseau de caméras 12 illustré en figure 1. La connexion est réalisée par voie filaire ou sans fil (par exemple liaison Wi-Fi ou Bluetooth).

L'interface homme-machine 22 comprend, par exemple, un afficheur et/ou un clavier. L'interface homme-machine 22 permet d'envoyer des requêtes à un utilisateur 25 et à recevoir des commandes en provenance de l'utilisateur 25.

Dans un premier exemple, le calculateur 24 comprend un processeur comprenant une unité de traitement de données, des mémoires et un lecteur de support d'informations.

Dans cet exemple, le calculateur 24 est en interaction avec un produit-programme d'ordinateur qui comporte des instructions de programme. Le produit-programme d'ordinateur est mémorisé sur un support d'informations.

Le support d'informations est un support lisible par le calculateur 24, usuellement par l'unité de traitement de données du calculateur 24. Le support lisible d'informations est un médium adapté à mémoriser des instructions électroniques et capable d'être couplé à un bus d'un système informatique. A titre d'exemple, le support lisible d'informations est une disquette, un disque optique, un CD-ROM, un disque magnéto-optique, une mémoire ROM, une mémoire RAM, une mémoire EPROM, une mémoire EEPROM, une carte magnétique, une carte optique, une clé USB, ou un disque SSD. Sur le support d'informations est mémorisé le produit-programme d'ordinateur comprenant des instructions de programme.

Le programme d'ordinateur est chargeable sur l'unité de traitement de données du calculateur 24 et est adapté pour entraîner la mise en oeuvre d'un procédé de suivi lorsque le programme d'ordinateur est mis en oeuvre sur l'unité de traitement du calculateur 24. Le procédé de suivi sera décrit en détails dans la suite de la description.

Dans un deuxième exemple, le calculateur 24 est réalisé sous la forme d'un ou plusieurs composants logiques programmables, tel que des FPGA (de l'anglais *Field Programmable Gate Array*), ou encore sous forme de circuits intégrés dédiés, tel que des ASIC (de l'anglais *Application Specific Integrated Circuit*).

Dans un troisième exemple, le calculateur 24 est réalisé sous la forme d'une unité centrale de calcul (CPU) et d'une unité graphique de calcul (GPU), cette dernière ayant la fonction de coprocesseur.

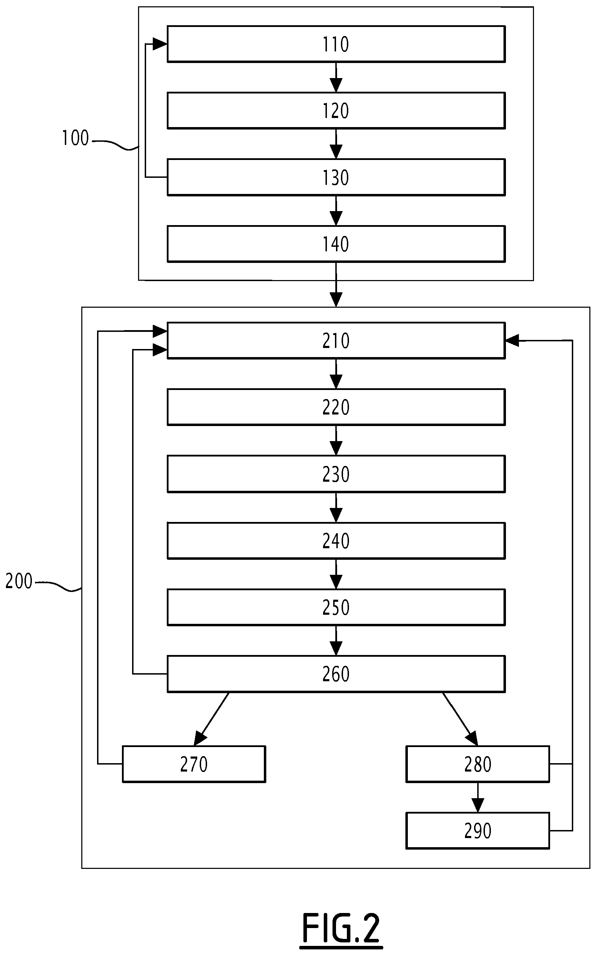

Le fonctionnement du dispositif de suivi 10 permet la mise en oeuvre d'un procédé de suivi qui est décrit en référence à l'organigramme de la figure 2.

Le procédé de suivi comprend une première phase 100 de détermination d'un élément à suivre, appelé élément de référence E_{réf}, et une deuxième phase 200 de suivi de l'élément de référence E_{réf}.

La première phase 100 du procédé de suivi comprend une étape 110 de réception d'au moins une image d'un environnement, par exemple, en provenance du réseau de caméras 12 illustré en figure 1.

La première phase 100 comprend, le cas échéant, une étape 120 de détection d'un élément initial sur au moins l'une des images reçues. La détection est, par exemple, réalisée par un algorithme de détection comprenant un modèle de détection de catégories d'éléments. Par exemple, l'algorithme de détection utilise un modèle d'apprentissage (en anglais « deep learning ») de type Faster RCNN/RFCN.

La première phase 100 comprend, ensuite, une étape 130 de détermination d'une signature visuelle pour au moins une des détections de l'élément initial. Par exemple, si l'élément initial a été détecté sur plusieurs images acquises par des caméras positionnées à des endroits différents, pour chaque caméra, la ou les détection de l'élément initial donneront lieu à une signature visuelle propre à la caméra. Les images d'un élément acquises par une même caméra forment un agrégat d'images dans le temps, appelé « tracklet ».

La signature visuelle d'un élément est un vecteur décrivant une apparence de l'élément. Par le terme « apparence », il est fait référence à l'aspect extérieur de l'élément (par exemple, la couleur, les dimensions ou la forme de l'élément). La signature visuelle tient notamment compte du point de vue de l'élément, de la technologie de la caméra ayant acquis une image de l'élément ou encore des conditions climatiques, c'est pourquoi il est obtenu une signature visuelle pour chaque détection d'un même élément.

La signature visuelle est, par exemple, déterminée par un modèle obtenu par entraînement d'un réseau de neurones avec une base de données d'images. Par exemple, la signature visuelle est obtenue selon la méthode décrite dans l'article intitulé « Person re-identification accross different datasets with multi-task learning » de Mathieu Ospici et Antoine Cecchi, publié dans ArXiv le 25 juillet 2018.

Le cas échéant, la première phase 100 comprend une étape 130 d'acquisition d'une commande de l'utilisateur de suivi de l'élément initial de sorte que l'élément initial est l'élément de référence E_{réf}. Chaque signature visuelle de l'élément initial est alors appelée signature visuelle de référence. L'élément de référence E_{réf} est alors associé à une liste de signatures de référence. L'élément de référence E_{réf} et la liste de signatures visuelles de référence sont alors mémorisés au moins temporairement dans une mémoire du calculateur 24.

La commande est obtenue via l'interface homme-machine 22 du dispositif de suivi 10.

Si aucune commande de suivi n'est reçue de l'utilisateur, les étapes de réception 110, de détection 120 et de détermination 130 sont répétées jusqu'à ce qu'un élément à suivre soit sélectionné par l'utilisateur.

En variante, la première phase 100 du procédé de suivi comprend seulement la réception d'une commande de suivi d'un élément E_{réf} associé à une liste de signatures visuelles de référence, l'élément de référence E_{réf} et la liste associée ayant été déterminés préalablement au procédé de suivi.

Une fois que l'élément de référence E_{réf} a été déterminé, la deuxième phase 200 du procédé de suivi est mise en oeuvre.

La deuxième phase 200 comprend une étape 210 de réception d'au moins une image de l'environnement acquise postérieurement à ou aux images ayant permis de déterminer l'élément de référence. De manière générale, les images reçues par le dispositif de suivi 10 sont des images acquises successivement par un même système d'acquisition, tel que le réseau de caméras 12 illustré en figure 1.

Ensuite, la deuxième phase 200 comprend, le cas échéant, une étape 220 de détection d'au moins un premier élément E1 sur au moins une image reçue. L'étape de détection 220 est mise en oeuvre de la même manière que l'étape de détection 120.

La deuxième phase 200 comprend, alors, une étape 230 de détermination d'une première signature visuelle pour au moins une détection de chaque premier élément E1. L'étape de détermination 230 est mise en oeuvre de la même manière que l'étape de détermination 130.

Ensuite, la deuxième phase 200 comprend une étape 240 de calcul, pour chaque premier élément E1, d'au moins une distance entre la ou les premières signatures visuelles et la ou les signatures visuelles de référence.

Par exemple, pour chaque premier élément E1, il est obtenu une distance entre une signature résultant de la moyenne des premières signatures visuelles et chaque signature visuelle de référence.

En variante, pour chaque premier élément E1, il est obtenu une distance entre chaque première signature visuelle et une signature résultant de la moyenne des signatures visuelles de référence.

Encore en variante, pour chaque premier élément E1, il est obtenu une distance entre une signature résultant de la moyenne des premières signatures visuelles et une signature résultant de la moyenne des signatures visuelles de référence.

Encore en variante, pour chaque premier élément E1, il est obtenu une distance entre chaque première signature visuelle et chaque signature visuelle de référence.

La ou chaque distance calculée est, par exemple, une distance euclidienne. Par exemple, la distance calculée est obtenue selon la méthode décrite dans l'article intitulé « Person re-identification accross different datasets with multi-task learning » de Mathieu Ospici et Antoine Cecchi, publié dans ArXiv le 25 juillet 2018.

La deuxième phase 200 comprend une étape 250 de comparaison, pour chaque premier élément E1, d'une distance fonction de la ou des distances calculées, à un premier seuil S1 et à un deuxième seuil S2. Le premier seuil S1 est inférieur ou égal au deuxième seuil S2.

Avantageusement, le premier seuil S1 est différent du deuxième seuil S2.

Par exemple, lorsqu'une seule distance est obtenue pour un même premier élément, la distance comparée est la distance calculée.

Par exemple, lorsque plusieurs distances sont obtenues pour un même premier élément E1, la distance comparée est la distance la plus faible obtenue pour le premier élément E1.

En variante, lorsque plusieurs distances sont obtenues pour un même premier élément E1, la distance comparée est une distance résultant de la moyenne des distances obtenues pour le premier élément E1.

La deuxième phase 200 comprend, alors, pour chaque premier élément E1, une étape 260 d'identification du premier élément E1 comme étant l'élément de référence, lorsque la distance comparée est inférieure ou égale au premier seuil S1. Le premier élément E1 est non-identifié lorsque la distance comparée est strictement supérieure au deuxième seuil S2.

Le cas échéant, lorsque le premier élément E1 n'a pas été identifié lors de l'étape d'identification 260 (distance strictement supérieure à S2) et que le premier élément E1 est le même élément que l'élément de référence E_{réf} avec une apparence différente de l'élément de référence E_{réf}, la deuxième phase 200 comprend une étape 270 d'ajout de la première signature visuelle à la liste de signatures visuelles de référence après réception d'une commande de l'utilisateur.

Le changement d'apparence du premier élément E1 par rapport à l'élément de référence E_{réf} est, par exemple, induit par un changement de couleur ou de forme du premier élément E1. Par exemple, lorsque l'élément de référence E_{réf} est un individu, l'ajout ou le retrait d'un vêtement par l'individu est susceptible d'impacter de manière significative l'apparence de l'individu. L'étape 270 permet à un utilisateur de mettre à jour la liste de signatures visuelles s'il constate un tel changement.

La commande est obtenue via l'interface homme-machine 22 du dispositif de suivi 10.

A l'issue de l'étape d'ajout 270, les étapes de réception 210, de détection 220, de détermination 230, de calcul 240, de comparaison 250, d'identification 260 et, le cas échéant les étapes ultérieures, de la deuxième phase 200 du procédé de suivi sont répétées à l'instant suivant avec la liste de signatures visuelles mise à jour.

En l'absence de l'étape d'ajout 270, les étapes de réception 210, de détection 220, de détermination 230, de calcul 240, de comparaison 250, d'identification 260 et, le cas échéant les étapes ultérieures, de la deuxième phase 200 du procédé de suivi sont aussi répétées à l'instant suivant avec la liste initiale de signatures visuelles.

Avantageusement, lorsque la distance comparée est strictement supérieure au premier seuil S1 et est inférieure ou égale au deuxième seuil S2, la deuxième phase 200 comprend une étape 280 d'envoi d'une requête de validation de l'identification du premier élément E1. L'intervalle entre le premier seuil S1 et le deuxième seuil S2 correspond ainsi à un intervalle de consultation de l'utilisateur.

Lorsqu'en réponse à la requête de validation, le dispositif de suivi 10 reçoit une validation de l'identification, la deuxième phase 200 comprend une étape 290 d'ajout de la première signature visuelle à la liste de signatures visuelles de référence. La commande est obtenue via l'interface homme-machine 22 du dispositif de suivi 10.

A l'issue de l'étape d'ajout 290, les étapes de réception 210, de détection 220, de détermination 230, de calcul 240, de comparaison 250, d'identification 260 et le cas échéant les étapes ultérieures, de la deuxième phase 200 du procédé de suivi sont répétées à l'instant suivant avec la liste de signatures visuelles mise à jour.

Ainsi, le présent procédé de suivi permet un suivi amélioré d'un élément par des actions de mise à jour de la liste de signatures visuelles de référence suite à des commandes de l'utilisateur.

En particulier, l'étape 270 d'ajout d'une signature visuelle d'un élément non-identifié dans la liste de signatures visuelles permet de continuer à suivre un élément alors même que son apparence visuelle a changé. Cela est par exemple le cas pour individu qui ajoute ou retire un vêtement. Cette étape permet donc d'améliorer la qualité du suivi et de diminuer le taux de faux négatifs.

En outre, les étapes 280 et 290 de validation et d'ajout permettent une ré-identification de l'élément de référence E_{réf} alors même que les conditions externes ou le point de vue de l'élément sur les images ont été modifiés ou que les images sont bruitées. Les conditions externes sont, par exemple, la luminosité et la météo. En effet, si une nouvelle apparition se produit sur un point de vue similaire (même technologie de caméra, conditions externes proches), le processus de ré-identification basé sur une comparaison de signatures fonctionnera avec une haute probabilité (distance inférieure au premier seuil). Par contre, si une nouvelle apparition se produit sur un point de vue très différent (technologie de caméra différente, conditions externes très différentes), le processus de ré-identification aura une plus faible probabilité de fonctionner (distance inférieure au premier seuil mais supérieure au deuxième seuil), d'où l'intérêt de faire valider l'identification à un utilisateur.

Enfin, la possibilité d'enregistrer plusieurs signatures visuelles de référence améliore la robustesse des identifications.

Un tel procédé est, par exemple, utilisable pour identifier le trajet de l'élément détecté et constituer ainsi des jeux de données d'entraînement.

Un tel procédé est aussi utilisable, par exemple, pour suivre indifféremment deux entités couplées, telles qu'un homme et son cheval, deux personnes agissant ensemble ou encore un parent et son enfant.

## Revendications

1. Procédé de suivi d'un élément de référence (E_{réf}) sur des images successives d'un environnement, l'élément de référence (E_{réf}) étant associé à une liste de signatures visuelles de référence comprenant au moins une signature visuelle de référence, la signature visuelle d'un élément étant un vecteur décrivant l'apparence de l'élément, le procédé étant mis en œuvre par un dispositif électronique de suivi (10) et comprenant à chaque instant les étapes de :
- réception d'au moins une image de l'environnement ;
- le cas échéant, détection d'au moins un premier élément (E1) sur au moins une image reçue ;
- détermination d'une première signature visuelle pour au moins une détection de chaque premier élément (E1) ;
- calcul, pour chaque premier élément (E1), d'au moins une distance entre la ou les premières signatures visuelles et la ou les signatures visuelles de référence ;
- comparaison, pour chaque premier élément (E1), d'une distance, fonction de la ou des distances calculées pour le premier élément (E1), à un premier seuil (S1) et à un deuxième seuil (S2), le premier seuil (S1) étant strictement inférieur au deuxième seuil (S2) ;
- pour chaque premier élément (E1), identification du premier élément (E1) comme étant l'élément de référence, lorsque la distance comparée est inférieure ou égale au premier seuil (S1), le premier élément (E1) étant non-identifié lorsque la distance comparée est strictement supérieure au deuxième seuil (S2) ;
- le cas échéant, lorsque le premier élément (E1) n'a pas été identifié lors de l'étape d'identification et que le premier élément (E1) est le même élément que l'élément de référence (E_{réf}) avec une apparence différente de l'élément de référence, ajout de la première signature visuelle à la liste de signatures visuelles de référence après réception d'une commande d'ajout d'un utilisateur ;
- lorsque la distance comparée est strictement supérieure au premier seuil (S1) et est inférieure ou égale au deuxième seuil (S2), envoi d'une requête de validation de l'identification du premier élément (E1) ; et
- ajout de la première signature visuelle à la liste de signatures visuelles de référence après réception d'une validation de l'utilisateur en réponse à la requête de validation.

2. Procédé de suivi selon la revendication 1, dans lequel le procédé comprend, en outre, les étapes de :
- détection d'un élément initial sur au moins une image reçue antérieurement par rapport à l'image sur laquelle le ou chaque premier élément (E1) a été détecté,
- détermination d'une signature visuelle pour au moins une détection de l'élément initial,
- acquisition d'une commande de suivi de l'élément initial de sorte que l'élément initial est l'élément de référence (E_{réf}) et chaque signature visuelle de l'élément initial est une signature visuelle de référence de la liste de signatures de référence.

3. Procédé de suivi selon la revendication 1 ou 2, dans lequel les images sont en provenance d'un réseau de caméras (12).

4. Procédé de suivi selon la revendication 3, dans lequel l'étape de réception comprend la réception d'au moins deux images de l'environnement imageant l'environnement selon deux points de vue différents, les deux images étant en provenance de deux caméras (12) du réseau de caméras (12) positionnées à des emplacements distincts.

5. Procédé de suivi selon l'une quelconque des revendications 1 à 4, dans lequel chaque signature visuelle est déterminée par un modèle comprenant un réseau de neurones.

6. Dispositif électronique de suivi (10) d'un élément de référence (E_{réf}) sur des images successives d'un environnement, l'élément de référence (E_{réf}) étant associé à une liste de signatures visuelles de référence comprenant au moins une signature visuelle de référence, la signature visuelle d'un élément étant un vecteur décrivant l'apparence de l'élément, le dispositif de suivi (10) comprenant :
- un canal (20) de réception d'images,
- une interface homme-machine (22), et
- un calculateur (24) configuré pour mettre en oeuvre un procédé de suivi selon l'une quelconque des revendications 1 à 5.

7. Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'un procédé selon l'une quelconque des revendications 1 à 5 lorsque le programme d'ordinateur est mis en oeuvre sur l'unité de traitement des données.

## Patentansprüche

1. Verfahren zur Nachverfolgung eines Referenzelements (E_{ref}) auf aufeinanderfolgenden Bildern einer Umgebung, wobei das Referenzelement (E_{ref}) einer Liste von visuellen Referenzsignaturen zugeordnet ist, die mindestens eine visuelle Referenzsignatur umfasst, wobei die visuelle Signatur eines Elements ein Vektor ist, der das Erscheinungsbild des Elements beschreibt, wobei das Verfahren durch eine elektronische Verfolgungsvorrichtung (10) implementiert wird und zu jedem Zeitpunkt die folgenden Schritte umfasst:
- Empfangen mindestens eines Bildes der Umgebung;
- gegebenenfalls Erkennen mindestens eines ersten Elements (E1) auf mindestens einem empfangenen Bild;
- Bestimmen einer ersten visuellen Signatur für mindestens eine Erkennung jedes ersten Elements (E1);
- Berechnen, für jedes erste Element (E1), mindestens eines Abstands zwischen der oder den ersten visuellen Signatur(en) und der oder den visuellen Referenzsignatur(en);
- Vergleich, für jedes erste Element (E1), eines Abstands, der von dem oder den für das erste Element (E1) berechneten Abstand/Abständen abhängig ist, mit einem ersten Schwellenwert (S1) und mit einem zweiten Schwellenwert (S2), wobei der erste Schwellenwert (S1) streng kleiner als der zweite Schwellenwert (S2) ist;
- für jedes erste Element (E1), Identifikation des ersten Elements (E1) als Referenzelement, wenn der verglichene Abstand kleiner oder gleich dem ersten Schwellenwert (S1) ist, wobei das erste Element (E1) nicht identifiziert wird, wenn der verglichene Abstand streng größer als der zweite Schwellenwert (S2) ist;
- gegebenenfalls, wenn das erste Element (E1) während des Identifikationsschritts nicht identifiziert wurde und das erste Element (E1) dasselbe Element wie das Referenzelement (E_{ref}) mit einem anderen Erscheinungsbild als das Referenzelement ist, Hinzufügen der ersten visuellen Signatur zu der Liste der visuellen Referenzsignaturen nach Empfang eines Hinzufügungsbefehls eines Benutzers;
- wenn der verglichene Abstand streng größer als der erste Schwellenwert (S1) und kleiner oder gleich dem zweiten Schwellenwert (S2) ist, Senden einer Anforderung zur Validierung der Identifikation des ersten Elements (E1); und
- Hinzufügen der ersten visuellen Signatur zu der Liste von visuellen Referenzsignaturen nach Empfang einer Validierung des Benutzers als Antwort auf die Validierungsanforderung.

2. Verfahren zur Nachverfolgung nach Anspruch 1, wobei das Verfahren ferner die folgenden Schritte umfasst:
- Erkennen eines Anfangselements auf mindestens einem Bild, das vor dem Bild empfangen wurde, auf dem das oder jedes erste Element (E1) erkannt wurde,
- Bestimmen einer visuellen Signatur für mindestens eine Erkennung des Anfangselements,
- Erfassen eines Nachverfolgungsbefehls des Anfangselements derart, dass das Anfangselement das Referenzelement (E_{ref}) ist und jede visuelle Signatur des Anfangselements eine visuelle Referenzsignatur der Liste von Referenzsignaturen ist.

3. Verfahren zur Nachverfolgung nach Anspruch 1 oder 2, wobei die Bilder von einem Kameranetzwerk (12) stammen.

4. Verfahren zur Nachverfolgung nach Anspruch 3, wobei der Schritt des Empfangens das Empfangen von mindestens zwei Bildern der Umgebung umfasst, die die Umgebung entsprechend zwei verschiedenen Blickrichtungen abbilden, wobei die beiden Bilder von zwei Kameras (12) des Kameranetzwerks (12) stammen, die an unterschiedlichen Standorten positioniert sind.

5. Verfahren zur Nachverfolgung nach einem der Ansprüche 1 bis 4, wobei jede visuelle Signatur durch ein Modell bestimmt wird, das ein neuronales Netzwerk umfasst.

6. Elektronische Vorrichtung zur Nachverfolgung (10) eines Referenzelements (E_{ref}) auf aufeinanderfolgenden Bildern einer Umgebung, wobei das Referenzelement (E_{ref}) einer Liste von visuellen Referenzsignaturen zugeordnet ist, die mindestens eine visuelle Referenzsignatur umfasst, wobei die visuelle Signatur eines Elements ein Vektor ist, der das Erscheinungsbild des Elements beschreibt, wobei die Verfolgungsvorrichtung (10) umfasst:
- einen Kanal (20) zum Empfangen von Bildern,
- eine Mensch-Maschine-Schnittstelle (22), und
- einen Rechner (24), der zum Implementieren eines Verfahrens zur Nachverfolgung nach einem der Ansprüche 1 bis 5 konfiguriert ist.

7. Computerprogrammprodukt, das ein lesbares Informationsmedium aufweist, auf dem ein Computerprogramm, umfassend Programmanweisungen, gespeichert ist, wobei das Computerprogramm auf eine Datenverarbeitungseinheit ladbar ist und dazu angepasst ist, die Implementierung eines Verfahrens nach einem der Ansprüche 1 bis 5 zu bewirken, wenn das Computerprogramm auf der Datenverarbeitungseinheit implementiert wird.

## Claims

1. A method for tracking a reference element (E_{réf}) on successive images of an environment, the reference element (E_{réf}) being associated with a list of reference visual signatures comprising at least one reference visual signature, the visual signature of an element being a vector describing the appearance of the element, the method being implemented by an electronic tracking device (10) and comprising at each instant the steps of:
- reception of at least one image of the environment;
- where applicable, detection of at least a first element (E1) on at least one received image;
- determination of a first visual signature for at least one detection of each first element (E1);
- calculation, for each first element (E1), of at least one distance between the first visual signature(s) and the reference visual signature(s);
- comparison, for each first element (E1), of a distance, as a function of the distance or distances calculated for the first element (E1), with a first threshold (S1) and a second threshold (S2), the first threshold (S1) being strictly less than the second threshold (S2);
- for each first element (E1), identification of the first element (E1) as the reference element, when the compared distance is less than or equal to the first threshold (S1), the first element (E1) being unidentified when the compared distance is strictly greater than the second threshold (S2);
- where applicable, when the first element (E1) has not been identified during the identification step and the first element (E1) is the same element as the reference element (E_{réf}) with a different appearance from the reference element, adding the first visual signature to the list of reference visual signatures after receipt of a user's add command;
- when the compared distance is strictly greater than the first threshold (S1) and less than or equal to the second threshold (S2), sending a request for validation of the identification of the first element (E1); and
- adding the first visual signature to the list of reference visual signatures after receiving a validation from the user in response to the validation request.

2. The tracking method according to claim 1, wherein the method further comprises the steps of:
- detection of an initial element on at least one image received previously with respect to the image on which the or each first element (E1) was detected,
- determination of a visual signature for at least one detection of the initial element,
- acquisition of a tracking command of the initial element so that the initial element is the reference element (E_{réf}) and each visual signature of the initial element is a reference visual signature of the list of reference signatures.

3. The tracking method according to claim 1 or 2, wherein the images are from a camera network.

4. The tracking method according to claim 3, wherein the reception step comprises reception of at least two images of the environment imaging the environment from two different viewpoints, the two images being from two cameras of the camera network positioned at separate locations.

5. The tracking method according to any one of claims 1 to 4, wherein each visual signature is determined by a model comprising a neural network.

6. An electronic tracking device (10) for tracking a reference element (E_{réf}) over successive images of an environment, the reference element (E_{réf}) being associated with a list of reference visual signatures comprising at least one reference visual signature, the visual signature of an element being a vector describing the appearance of the element, the tracking device (10) comprising:
- an image reception channel (20),
- a human-machine interface (22), and
- a computer (24) configured to implement a tracking method according to any one of claims 1 to 5.

7. Computer program product comprising a readable information medium, on which is stored a computer program comprising program instructions, the computer program being loadable onto a data processing unit and adapted to cause the implementation of a method according to any one of claims 1 to 5 when the computer program is executed on the data processing unit.
